# EUROPÄISCHE PATENTSCHRIFT

(11) **EP 2 597 294 B1**
(45) Veröffentlichungstag und Bekanntmachung des Hinweises auf die Patenterteilung: **19.07.2017**
(21) Anmeldenummer: 12006788.9
(22) Anmeldetag: 28.09.2012
(51) Int. Cl.: F02M 26/48, F02M 26/54, F02D 9/06

(54) **Ventil, insbesondere Niederdruckventil, zur Steuerung einer Abgasrückführung**
Valve, in particular low pressure valve, for controlling exhaust gas recirculation
Soupape, notamment soupape basse pression, destinée à commander le recyclage des gaz d'échappement

(30) Priorität: 23.11.2011 DE 102011119139
(43) Veröffentlichungstag der Anmeldung: 29.05.2013
(73) Patentinhaber: BorgWarner Esslingen GmbH, 73730 Esslingen am Neckar (DE)
(72) Erfinder: Bareis, Bernd, Dr., 73527 Täferrot-Utzstetten (DE)
(74) Vertreter: Twelmeier Mommer & Partner

(56) Entgegenhaltungen:
- EP-A1- 0 918 925
- EP-A2- 1 936 151
- US-A1- 2011 031 425

## Beschreibung

Die Erfindung bezieht sich auf ein Ventil, insbesondere Niederdruckventil, zur Steuerung einer Abgasrückführung bei einer Brennkraftmaschine, insbesondere in einem Fahrzeug, mit einem Gehäuse, das zur Abgasführung einen Kanalabschnitt enthält, mit einem Ventilglied, das im Gehäuse angeordnet ist und zum Steuern des Abgasdurchganges im Kanalabschnitt ausgebildet ist, und mit einem Stellantrieb, der am Gehäuse angebracht und zum Verstellen des Ventilgliedes ausgebildet ist.

Ventile dieser Art, auch Abgasrückführventile genannt, sind üblicherweise bei Abgasrückführsystemen in einer Abgasrückführleitung zum Einstellen einer Menge des von der Abgasseite zur Frischluftseite rückgeführten Abgases angeordnet. Das Abgasrückführventil ist somit zum Einstellen der Abgasrückführmenge oder Abgasrückführrate ausgestaltet. Es steuert die Abgasmenge oder Abgasrate in Abhängigkeit von Betriebsparametern einer Brennkraftmaschine. Bei der Gestaltung und Anordnung als Niederdruckventil befindet sich das Abgasrückführventil z. B. in einer an den Ausgang einer Abgasturbine angeschlossenen Niederdruck-Abgasleitung, die in eine Frischluftleitung mündet, und zwar vor Eintritt in einen Ladeluftverdichter. Ventile der eingangs genannten Art können als Drehventile ausgebildet sein, bei denen ein Drehantrieb eine Welle betätigt, mit der als Ventilglied eine im Kanalabschnitt befindliche Flügelklappe betätigt wird. Die üblicherweise eingesetzten Stellantriebe sind relativ groß und schwer sowie kostenaufwändig. Das gleiche gilt für das das Ventilglied enthaltende Gehäuse. Für die Regelung wird angestrebt, dass die jeweilige Position des Ventilgliedes erfasst und als Istwert einer Regeleinrichtung zugeführt wird. Bei bekannten Ventilen ist diese Regeleinrichtung aufwändig. Bekannte Ventile der eingangs genannten Art erfordern einen großen Bauraum und sind störanfällig und unterliegen einem Verschleiß. Sie gewährleisten keine zuverlässige Funktion mit hoher Regelgenauigkeit über eine lange Betriebs- und Einsatzzeit.

Ein Ventil mit den im Oberbegriff des Anspruchs 1 angegebenen Merkmalen ist aus der US 2011/0031425 A1 bekannt. In der EP 0 918 925 A1 ist ein Ventil für ein Abgasrückführsystem offenbart, in welchem eine auf einer Stellwelle sitzende rechteckige Klappe von rotierenden Betätigungsmitteln drehbar ist, wobei besagte rotierende Betätigungsmittel einen Stator und einen Rotor umfassen, die wenigstens mit einem Magneten und der andere wenigstens mit einer Steuerwicklung versehen und derart angebracht sind, dass bei Fehlen des Stroms in der Steuerwicklung die Klappe durch die magnetischen Restkräfte geschlossen wird. Die EP 1 936 151 A2 offenbart ein Klappenventil, in welchem zur Erzeugung einer Dichtheit in der Schließstellung die Klappe mit einer Kraft beaufschlagt wird, welche entsprechend der Festigkeit der für die Klappe bzw. ihre gehäuseseitigen Anschlagflächen verwendeten Werkstoffe gewählt wird.

Der Erfindung liegt die Aufgabe zu Grunde, ein Ventil der eingangs genannten Art, welches die im Oberbegriff des Anspruchs 1 angegebenen Merkmale aufweist, zu verbessern.

Diese Aufgabe wird durch ein Ventil mit den in Anspruch 1 angegebenen Merkmalen gelöst. Bei einem Ventil gemäß der Erfindung ist vorgesehen, dass der Stellantrieb aus einem elektromagnetischen Drehantrieb mit einer Antriebswelle dieses gebildet ist, dass die Antriebswelle verlängert aus dem Drehantriebsgehäuse herausgeführt ist und als bis zum Gehäuse durchgehende Stellwelle ausgebildet ist, die quer zur Strömungsrichtung in das Gehäuse ragt, darin drehfest am Ventilglied angreift und um ihre Achse zur Betätigung des Ventilgliedes drehverstellbar ist, und dass das Ventilglied aus einer zum Kanalabschnitt quer gerichteten kreisförmigen Klappe gebildet ist, die in ihrer Schließstellung mit Randbereichen dieser an axialen Anschlagflächen beiderseits der Achse im Gehäuse anliegt.

Ein Ventil dieser Art hat vielfältige Vorteile. Dadurch, dass die Antriebswelle des Drehantriebes in durchgehend verlängerter Gestalt als Stellwelle zur Drehbetätigung des Ventilgliedes ausgebildet ist, ergibt sich eine sehr kompakte Bauweise und eine kostengünstige Gestaltung. Der Drehantrieb kann in dieser Form als Direktantrieb wirken, wobei die Voraussetzungen dafür geschaffen sind, dass eine berührungslose Drehstellungssensoreinheit zur direkten Sensierung der jeweiligen Stellung des Ventilgliedes verwirklicht werden kann, deren Sensorelement, z. B. in Form eines Sensormagneten, direkt drehfest mit der Stellwelle verbunden ist. Irgendwelche Kupplungselemente dazwischen sind entbehrlich. Eine derart mögliche direkte Sensierung der Ventilposition ermöglicht eine hohe Regelgenauigkeit bei einfacher, leichter und kostengünstiger Gestaltung. Das Ventil ist ferner robust und verschleißfrei. Es bedingt einen relativ geringen Aufwand an Bauteilen und Kosten. Dabei sind im Bereich des Ventilgliedes und im Kanalabschnitt hohe Differenzdrücke möglich ohne die Gefahr von Verformungen oder Beschädigungen.

Weitere Erfindungsmerkmale sowie besondere Ausgestaltungen ergeben sich aus den Unteransprüchen und aus der nachfolgenden Beschreibung.

Die Erfindung ist nachfolgend anhand von in den Zeichnungen gezeigten Ausführungsbeispielen näher erläutert. Es zeigen:
- Fig. 1: einen schematischen Schnitt eines Ventils für eine Abgasrückführung gemäß einem ersten Ausführungsbeispiel, wobei sich das Ventilglied in der Schließstellung befindet,
- Fig. 2: einen schematischen Schnitt entlang der Linie II-II in Fig. 1, wobei sich das Ventilglied in Öffnungsstellung befindet,
- Fig. 3: eine schematische perspektivische Ansicht eines Mitnehmers des Ventils in Fig. 1,
- Fig. 4: einen schematischen Schnitt einer Einzelheit aus Fig. 1,
- Fig. 5: eine Seitenansicht mit teilweisem Schnitt einer weiteren Einzelheit aus Fig. 1,
- Fig. 6: einen schematischen Schnitt etwa entsprechend demjenigen in Fig. 1 eines Ventils gemäß einem zweiten Ausführungsbeispiel.

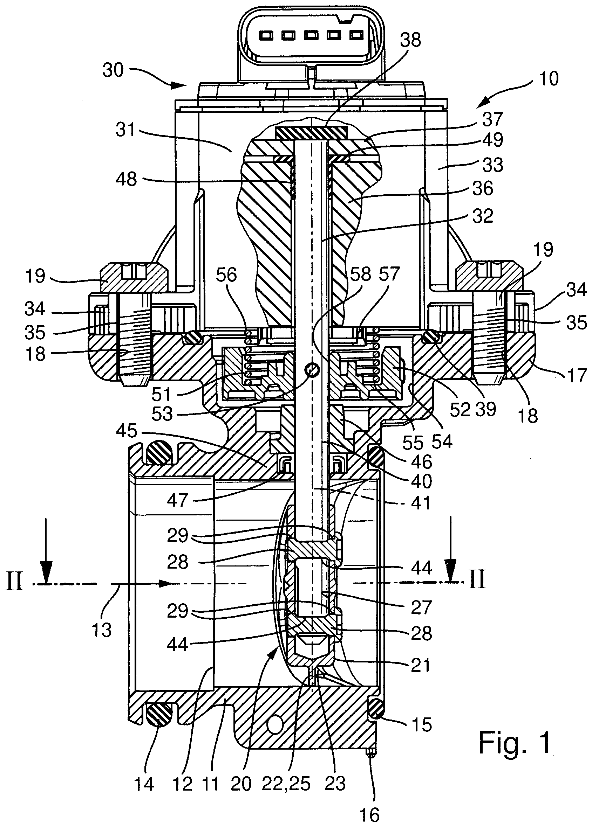

In Fig. 1 bis 5 ist ein erstes Ausführungsbeispiel eines Ventils 10 für die Steuerung einer Abgasrückführung bei einer Brennkraftmaschine, insbesondere in einem Fahrzeug, gezeigt. Ventile dieser Art werden auch als Abgasrückführventile bezeichnet. Beim dargestellten Ventil 10 handelt es sich um insbesondere ein Niederdruckventil. Bei einer Niederdruckabgasrückführung wird Abgas aus einer Niederdruck-Abgasleitung in Strömungsrichtung des Abgases nach einer Abgasturbine entnommen und über eine Niederdruck-Abgasrückführleitung einer Niederdruck-Ladeluftleitung zugeführt, die mit einem Ladeluftverdichter verbunden ist.

Statt als Niederdruckventil ist das gezeigte Ventil 10 auch für eine Hochdruck-Abgasrückführung geeignet, bei der Abgas aus einer Hochdruckabgasleitung abgezweigt und einer Hochdruckladeluftleitung zugeführt wird.

Das Ventil 10 weist ein Gehäuse 11 auf, das zur Abgasführung einen Kanalabschnitt 12 enthält, dem Abgas in Pfeilrichtung 13 zugeführt wird. Das Gehäuse 11 ist im Wesentlichen zylindrisch, ebenso der innere Kanalabschnitt 12. Das Gehäuse 11 ist aus einem Druckgussteil, insbesondere Aluminiumdruckgussteil, gebildet. Es weist im Bereich seiner beidseitigen axialen Enden in Nuten aufgenommene Dichtungsringe 14 und 15 auf, über die beim Einbau in eine Leitung, in ein Gehäuse od. dgl. eine radiale bzw. axiale Abdichtung geschieht. Der Dichtungsring 14 besteht aus einem O-Ring. Der Dichtungsring 15 kann als Formdichtung aus einem Elastomer gebildet sein, die zumindest einen aus dem Gehäuse 11 radial hervorstehenden Vorsprung 16 als Sichtkontrolle für das Vorhandensein dieses Dichtungsringes 15 aufweisen kann. Quer zum Kanalabschnitt 12 ist in Abstand von diesem ein mit dem Gehäuse 11 einstückiger Befestigungsflansch 17 vorgesehen, der mehrere, z. B. zwei, Befestigungslöcher 18 für durchgreifende Befestigungsmittel 19, z. B. Schrauben, aufweist.

Ferner weist das Ventil 10 ein Ventilglied 20 auf, das im Gehäuse 11 angeordnet und zum Steuern des Abgasdurchganges im Kanalabschnitt 12 ausgebildet ist.

Ferner weist das Ventil 10 einen Stellantrieb 30 auf, der am Gehäuse 11 angebracht ist und zum Verstellen des Ventilgliedes 20 ausgebildet ist. Dieser Stellantrieb 30 ist als Direktantrieb gestaltet und aus einem elektromagnetischen Drehantrieb 31 mit einer Antriebswelle 32 dieses gebildet. Der Drehantrieb 31 hat ein Drehantriebsgehäuse 33 aus Kunststoff mit damit einstückigen Befestigungslaschen 34, die mit den Befestigungslöchern 18 des Befestigungsflansches 17 fluchtende Löcher 35 enthalten, durch die die Befestigungsmittel 19 hindurchgreifen. Der elektromagnetische Drehantrieb 31 enthält im Drehantriebsgehäuse 33 einen schematisch angedeuteten, von der Antriebswelle 32 durchsetzten Spulenkörper 36 und einen mit der Antriebswelle 32 drehfest verbundenen Magnetrotor 37. Die Funktionsweise eines derartigen elektromagnetischen Drehantriebs 31 ist bekannt und bedarf daher keiner weiteren Beschreibung. Am in Fig. 1 oberen Ende der Antriebswelle 32 sitzt ein mit dieser drehfest verbundenes, schematisch angedeutetes Sensorelement 38, insbesondere in Form eines Permanentmagneten, als Teil einer ansonsten nicht weiter gezeigten, berührungslosen Drehstellungssensoreinrichtung zur direkten Sensierung der jeweiligen Stellung des Ventilgliedes 20. Der Drehantrieb 31 sitzt mit seinem Drehantriebsgehäuse 33 auf dem Befestigungsflansch 17 unter Vermittlung eines Dichtungsringes 39, z. B. eines O-Ringes, abgedichtet auf und ist mit diesem über die Befestigungsmittel 19 fest, jedoch lösbar, verbunden. Die Befestigungslöcher 18 können z. B. als Gewindebohrungen ausgebildet sein, in die die Befestigungsmittel 19, z. B. Schrauben, mit einem Gewindeabsatz eingeschraubt sind.

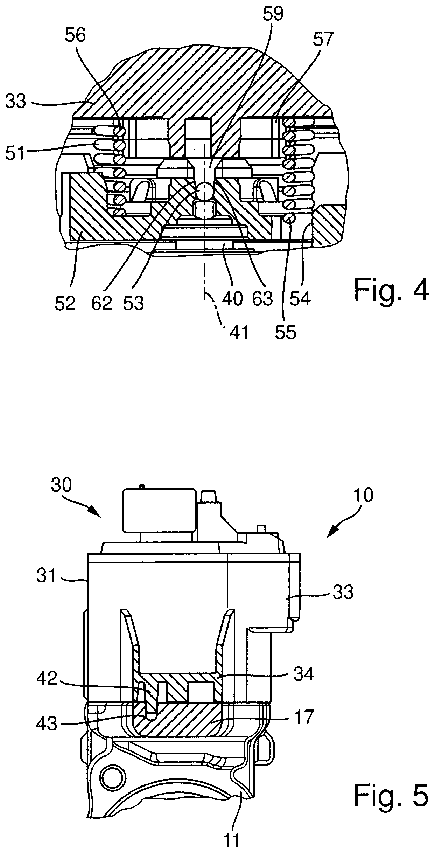

Aus Fig. 5 ist ersichtlich, dass am Drehantriebsgehäuse 33, z. B. einer Befestigungslasche 34 dieses, ein überstehender Passstift 42 angeformt ist, der in eine passende Nut 43 des Befestigungsflansches 17 formschlüssig eingreift und zur Verdrehsicherung zwischen dem Drehantriebsgehäuse 33 einerseits und dem Gehäuse 11, insbesondere dessen Befestigungsflansch 17, andererseits dient.

Man erkennt insbesondere aus Fig. 1, dass die Antriebswelle 32 des Drehantriebes 31 verlängert aus dem Drehantriebsgehäuse 33 herausgeführt ist und als bis zum Gehäuse 11 durchgehende Stellwelle 40 ausgebildet ist, die quer zur Strömungsrichtung in das Gehäuse 11 ragt, darin drehfest am Ventilglied 20 angreift und um ihre Achse 41 zur Betätigung des Ventilgliedes 20 drehverstellbar ist.

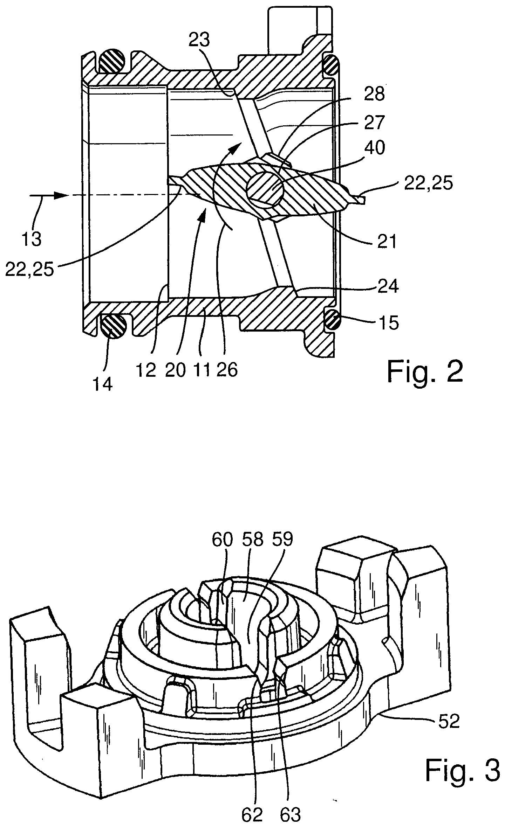

Das Ventilglied 20 ist aus einer zum Kanalabschnitt 12 quer gerichteten kreisförmigen Klappe 21 gebildet, die in ihrer in Fig. 1 gezeigten Schließstellung mit Randbereichen 22 dieser an axialen Anschlagflächen 23, 24 beiderseits der Achse 21 im Gehäuse 11 anliegt. In der in Fig. 2 dargestellten Öffnungsstellung der Klappe 21 ist diese nicht quer zum Kanalabschnitt 12 derart gerichtet, dass der Abgasdurchgang gesperrt wäre. Stattdessen ist die Klappe 21 annähernd längs ausgerichtet. Die gehäuseseitigen axialen Anschlagflächen 23, 44 sind innerhalb einer in Bezug auf eine Diagonale des Kanalabschnitts 12 unter einem spitzen Winkel schräg verlaufenden Ebene enthalten, wie insbesondere aus Fig. 2 ersichtlich ist. Dabei verlaufen diese Anschlagflächen 23, 24 etwa halbkreisförmig. Als Randbereiche 22 weist die Klappe 21 am Außenrand eine umlaufende Lippe 25, z. B. mit geringerer Querschnittsdicke, auf, mit der die Klappe 21 in ihrer Schließstellung an den gehäuseseitigen axialen Anschlagflächen 23, 24 flächig und zumindest im Wesentlichen dichtend axial anliegt. Zur Betätigung der Klappe 21 in ihre Schließstellung gemäß Fig. 1 erfolgt, ausgehend von der Öffnungsstellung gemäß Fig. 2, mittels des Drehantriebs 31 eine Drehverstellung der Klappe 21 in Pfeilrichtung 26, somit im Uhrzeigersinn, derart, dass die Lippen 25 flächig axial an den zugeordneten axialen Anschlagflächen 23, 24 zur Anlage kommen.

Die Klappe 21 enthält eine diametral verlaufende innere Bohrung 27, in der ein zugeordneter Endbereich der Stellwelle 40 vorzugsweise formschlüssig aufgenommen ist. Diese diametrale Bohrung 27 ist beim ersten Ausführungsbeispiel gemäß Fig. 1 bis 5 als Sacklochbohrung ausgebildet. Der zugeordnete Endbereich der Stellwelle 40 ist in die Bohrung 27 eingesteckt, ragt jedoch nicht über den Außenrand der Klappe 21 hinaus. Die Klappe 21 ist mittels eines oder mehreren, z. B. zwei, Befestigungsmitteln 28, insbesondere Schrauben, an der Stellwelle 40 befestigt. Die Befestigungsmittel 28 sind quer zur Achse gerichtet und durchsetzen quer verlaufende Bohrungen 29 in der Klappe 21 sowie 44 in der Stellwelle 40. Die Bohrungen 44 in der Stellwelle 40 sind z. B. als diametrale Gewindebohrungen ausgebildet, während die Bohrungen 29 in der Klappe 21 als Durchgangsbohrungen ausgebildet sein können. Die Befestigungsmittel 28 bestehen z.B. aus Gewindeschrauben, wobei diese Befestigungsmittel 28 an einem Ende im Bereich der Bohrungen 29 in Bezug auf die Klappe 21 gesichert sein können, z. B. durch Verstemmen, was in Fig. 1 durch leichte Verdickung der dort linken Enden der Befestigungsmittel 28 angedeutet ist. Es versteht sich, dass auch andere Sicherungsmittel zum Einsatz kommen können.

Das Ventilglied 20, insbesondere die Klappe 21, ist aus einem Feingussteil, insbesondere aus Edelstahl, gebildet. Dadurch ist eine einfache, kostengünstige Herstellung dieses Ventilgliedes 20 ermöglicht. Auch ist dadurch die Voraussetzung dafür geschaffen, die Bohrung 27 in der Klappe 21 mit einem solchen Durchmesser zu verwirklichen, der dem Durchmesser der Stellwelle 40 entspricht, welcher sich durch den Durchmesser der durchgehenden Antriebswelle 32 ergibt. Für die Stellwelle 40 kann somit dieser Durchmesser beibehalten werden. Eine etwaige Durchmesserreduzierung mit einhergehender Schwächung der Festigkeit und Stabilität der Stellwelle 40 ist daher nicht notwendig. Der in den Kanalabschnitt 12 ragende Wellenbereich der Stellwelle 40 ist so stabil, dass auch größere Differenzdrücke beidseitig der Klappe 21 keine Verformung der frei auskragenden Stellwelle 40 befürchten lassen.

Man erkennt, dass beim ersten Ausführungsbeispiel gemäß Fig. 1 bis 5 die Stellwelle 40 das Gehäuse 11 nur in einem mit 45 bezeichneten Gehäusebereich, der sich zwischen der Klappe 21 und dem Drehantrieb 31 befindet, durchsetzt und zusammen mit der Klappe 21 in den Kanalabschnitt 12 ragt. Die Stellwelle 40 ist im Gehäuse 11 in lediglich einem einzigen Radiallager 46 gelagert, das diesem Gehäusebereich 45, längs der Achse 41 betrachtet, auf der in Fig. 1 oberen Seite der Klappe 21 und in Abstand von dieser angeordnet ist. Dieses Radiallager 46 besteht vorzugsweise aus einem Gleitlager. Es ist im Gehäuse 11, insbesondere Gehäusebereich 45, zum Kanalabschnitt 12 hin mittels eines Dichtungsringes 47 abgedichtet, der vorzugsweise aus peroxidisch vernetztem Kunststoff, z. B. FKM, besteht. Das Radiallager 46 besteht z. B. aus einer Buchse aus Kunststoff. Durch den Dichtungsring 47 ist dieses Radiallager 46 vor dem Eintrag von Feuchtigkeit, z. B. Abgaskondensat, und gegen Eisbildung sicher geschützt.

Aus Fig. 1 wird deutlich, dass die Stellwelle 40 mit dem in Fig. 1 oberen Endabschnitt ihrer im Drehantrieb 31 enthaltenen Antriebswelle 32 im Drehantrieb 31 mittels eines nur schematisch angedeuteten Radiallagers 48 und eines schematisch angedeuteten Axiallagers 49 gelagert ist, und zwar über den sich daran in einer Axialrichtung abstützenden Magnetrotor 37.

Man erkennt, dass durch die Lagerung der Stellwelle 40 über die beiden axial beabstandeten Radiallager 46 und 48 eine gute und sichere radiale Abstützung der Stellwelle 40 erreicht ist trotz des in den Kanalabschnitt 12 frei auskragenden, die Klappe 21 tragenden Abschnitts der Stellwelle 40. In der Schließstellung der Klappe 21 werden auch große Differenzdrücke, die an der Klappe 21 wirksam sind, zuverlässig beherrscht ohne Verformung der Stellwelle 40 mit Klappe 21. Die in ihrer Schließstellung mit der Lippe 25 an den axialen Anschlagflächen 23, 24 anliegende Klappe 21 bewirkt unter Strömungsdruck eine axiale Dichtung mit nur geringer Ventilleckage. Aufgrund des axial weit entfernt von der Klappe 21 befindlichen Axiallagers 49, das z. B. als Kugellager ausgebildet ist, ergibt sich eine spielfreie axiale Lagerung der Stellwelle 40 mit Klappe 21, was ebenfalls einer großen Regelgenauigkeit dient. Eine solche wird noch durch die Drehstellungssensoreinrichtung mit dem Sensorelement 38 als Teil dieser gesteigert, mit dem Vorteil einer direkten Sensierung der Position der Klappe 21 ohne die Notwendigkeit einer zwischengeschalteten Kupplung. Das beschriebene Ventil 10 ist in dieser Gestaltung verschleißfrei und robust. Es ergibt sich eine kompakte Bauform mit reduzierter Anzahl von Bauelementen und dadurch eine leichte, kostengünstige Gestaltung.

Das Ventil 10 ist mit einer Fail-Safe-Einrichtung ausgestattet, die eine Feder 51, z. B. in Form einer zylindrischen Schraubenfeder, aufweist, die mit einem Federende 55 mit der Stellwelle 40 verbunden ist und deren anderes Federende 56 am Drehantriebsgehäuse 33 fixiert ist. Die Verbindung des einen Endes der Feder 51 mit der Stellwelle 40 erfolgt mittelbar über einen Mitnehmer 52 und ein Rastglied 53, z. B. in Form eines Stiftes, das fest mit der Stellwelle 40 verbunden ist, z. B. durch eine diametrale Bohrung in der Stellwelle 40 hindurch gesteckt und darin gesichert ist. Der Mitnehmer 52 und die Feder 51 sind in einer Vertiefung 54 aufgenommen, die im Befestigungsflansch 17 des Gehäuses 11 enthalten ist. Die Vertiefung 54 ist etwa topfförmig und in Bezug auf die Stellwelle 40 koaxial. Die Anordnung ist demgemäß so getroffen, dass im Gehäuse 11 zwischen diesem und dem Drehantrieb 31 der mit der Stellwelle 40 drehfest und axial gekuppelte Mitnehmer 52 und die Fail-Safe-Feder 51, vorzugsweise in Form einer zylindrischen Schraubenfeder, angeordnet sind, wobei die Feder 51 innerhalb des Mitnehmers 52 aufgenommen und zentriert ist und mit einem Federende, z. B. dem Ende 55, am Mitnehmer 52 fixiert ist, während ein anderes Federende, z. B. das Federende 56, am Drehantriebsgehäuse 33 fixiert ist. Die Feder 51 ist in Bezug auf das Drehantriebsgehäuse 33 mittels eines etwa zylindrischen Führungsteiles 57 dieses zentriert, der vom Ende der Feder 51 übergriffen ist.

Der in Fig. 3 für sich allein dargestellte Mitnehmer 52 ist über eine zentrale Durchgangsöffnung 58 auf der Stellwelle 40 zentriert und gehalten. Er enthält zumindest eine, beim gezeigten Ausführungsbeispiel zwei diametral gegenüberliegende axiale Rastöffnungen 59, 60, z. B. in Form eines in Fig. 3 nach oben offenen Schlitzes, in die bei der Montage das Rastglied 53, z. B. in Form eines Stiftes, formschlüssig zur Drehmitnahme des Mitnehmers 52 mit der Stellwelle 40 eingreift. Auf diese Weise ist die Drehmomentübertragung zwischen der Stellwelle 40 und dem Mitnehmer 52 verwirklicht. Ferner ist der Mitnehmer 52 mit der Stellwelle 40 axial gekuppelt, und zwar mittels einer Klipsverbindung. Diese Klipsverbindung weist Rastelemente 62, 63, z. B. Rastnasen, auf, mit denen das Rastglied 53 unter zumindest axialer Verrastung beim Zusammenbau verrastet. Der Mitnehmer 52 besteht aus Kunststoff, insbesondere einem Kunststoffformteil. Die Rastelemente 62, 63 können elastisch sein. Beim Zusammenbau kann das Rastglied 53 über die schlitzartigen Rastöffnungen 59, 60, die radial weiter innen liegen, zunächst in den Zwischenbereich dieser einfahren und bei weiterer axialer Annährung in den Zwischenbereich zwischen den Rastelementen 62 und 63 gelangen und danach hinter diesen, insbesondere den Rastnasen, verrasten, wie in Fig. 4 gezeigt ist, wodurch die axiale Verbindung zwischen dem Mitnehmer 52 und dem Rastglied 53 der Stellwelle 40 hergestellt ist. Das Rastglied 53, insbesondere der Stift, steht beidseitig über den Durchmesser der Stellwelle 40 radial ausreichend weit über, so dass ein Durchqueren der schlitzartigen Rastöffnungen 59, 60 und radial weiter außen ein Verrasten zwischen den Rastelemente 62, 63 auf der einen Seite und entsprechenden Rastelementen auf der diametral gegenüberliegenden Seite erfolgen kann. Der Zwischenbereich zwischen den Rastelementen 62, 63 ist ebenfalls etwa schlitzartig, so dass dadurch auch noch eine Kupplung in Umfangsrichtung erfolgen kann.

Aufgrund dieser Gestaltung der Fail-Safe-Einrichtung ist eine einfache, schnelle und sichere Montage beim Zusammenbau erreicht und ferner zugleich eine kompakte Bauform verwirklicht.

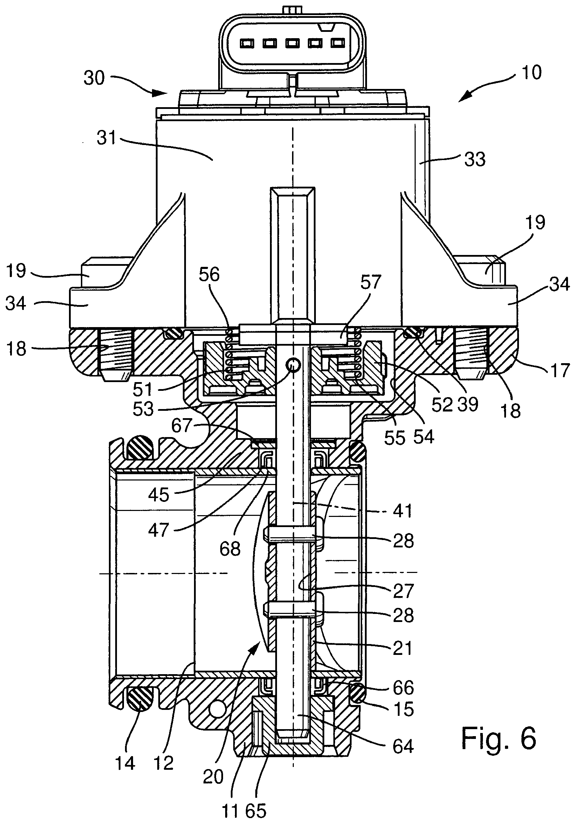

Bei dem in Fig. 6 gezeigten zweiten Ausführungsbeispiel sind für die Teile, die dem ersten Ausführungsbeispiel in Fig. 1 bis 5 entsprechen, gleiche Bezugszeichen verwendet, so dass dadurch zur Vermeidung von Wiederholungen auf die Beschreibung des ersten Ausführungsbeispieles Bezug genommen ist.

Beim Ventil 10 gemäß Fig. 6 ist die diametrale Bohrung 27 der Klappe 21 als diametral durchgehende, beidendig offene Bohrung ausgebildet, wobei die Stellwelle 40 das Gehäuse 11 beidseitig der Klappe 21 durchsetzt und mit dem Wellenende 64, das auf der dem Drehantrieb 31 abgewandten Seite der Klappe 21 aus dieser herausragt, mittels eines Radiallagers 65 im Gehäuse 11 gelagert ist. Das Radiallager 65 kann als Gleitlager ausgebildet sein und z. B. aus einer eingepressten Buchse bestehen. In vorteilhafter Weise ist dieses Radiallager 65 im Gehäuse 11 zum Kanalabschnitt 12 hin mittels eines Dichtungsringes 66 vorzugsweise aus peroxidisch vernetztem Kunststoff abgedichtet. Zur Abdichtung auf der gegenüberliegenden Seite der Klappe 21 kann ein anderer, ebensolcher Dichtungsring 47 vorgesehen sein. An diesen schließt sich z. B. zur Abstützung eine Scheibe 67 an.

Eine weitere Besonderheit des Ventils 10 gemäß dem zweiten Ausführungsbeispiel sieht vor, dass der Kanalabschnitt 12 zumindest im Bereich des Ventilgliedes 20, insbesondere in Form der Klappe 21, eine mit dem Gehäuse 11 fest verbundene Rohrauskleidung 68 aufweist, die z. B. aus Edelstahl besteht und als Korrosionsschutz für das Gehäuse 11 dient. Diese Rohrauskleidung 68 weist die axialen Anschlagflächen wie in die Fig. 1 bis 5 auf, die in Fig. 6 nicht sichtbar sind. Es versteht sich, dass auch bei dem Ventil 10 gemäß dem ersten Ausführungsbeispiel in Fig. 1 bis 5 eine derartige Rohrauskleidung 68 vorgesehen sein kann. Durch die Rohrauskleidung 68, insbesondere aus Edelstahl, kann für das Gehäuse 11 ein kostengünstiges Druckgussteil, insbesondere Aluminiumdruckgussteil, verwendet werden und dieses durch die Rohrauskleidung 68, insbesondere aus Edelstahl, hinsichtlich des Korrosionsschutzes in einfacher und kostengünstiger Weise verbessert werden. Die zylinderhülsenförmige Rohrauskleidung 68 wird bei der Herstellung des Gehäuses 11 in die dafür verwendete Form eingelegt und vom Druckgussmaterial umspritzt. Im Anschluss daran wird dieses Rohling-Gehäuse durch Herstellung der axialen Anschlagflächen 23 und 24 und in sonstiger Weise bearbeitet, so dass sich die Gestalt gemäß Fig. 6 ergibt.

Bei dem Ventil gemäß Fig. 6 ist eine Lagerung der Stellwelle 40 beidseitig des Ventilgliedes 20 in Form der Klappe 21 verwirklicht, nämlich zum einen durch ein Radiallager entsprechend dem Radiallager 48 im Drehantrieb 31 und zum anderen durch das im unteren Teil des Gehäuses 11 bei dem Wellenende 64 befindliche Radiallager 65. Aufgrund der beidendigen Radialabstützung der Stellwelle 40 sind größere Beanspruchungen und daher größere Differenzdrücke möglich. Vorteilhaft ist ferner, dass aufgrund des unteren Radiallagers 65 höhere Montagekräfte am Wellenende 64 möglich sind. Z. B. kann das Ventilglied 20, insbesondere in Form der Klappe 21, im Gehäuse 11 kalibriert werden. Die Festigkeit und Steifigkeit des Ventils 10 ist erhöht.

## Patentansprüche

1. Ventil, insbesondere Niederdruckventil, zur Steuerung einer Abgasrückführung bei einer Brennkraftmaschine, insbesondere in einem Kraftfahrzeug, mit einem Gehäuse (11), das zur Abgasführung einen Kanalabschnitt (12) enthält, mit einem Ventilglied (20), das im Gehäuse (11) angeordnet ist und zum Steuern des Abgasdurchganges im Kanalabschnitt (12) ausgebildet ist, und mit einem Stellantrieb (30), der am Gehäuse (11) angebracht ist und zum Verstellen des Ventilgliedes (20) ausgebildet ist,
wobei der Stellantrieb (30) aus einem elektromagnetischen Drehantrieb (31) mit einer Antriebswelle (32) dieses gebildet ist, wobei die Antriebswelle (32) verlängert aus dem Drehantriebsgehäuse (33) herausgeführt ist und als bis zum Gehäuse (11) durchgehende Stellwelle (40) ausgebildet ist, die quer zur Strömungsrichtung in das Gehäuse (11) ragt, darin drehfest am Ventilglied (20) angreift und um ihre Achse (41) zur Betätigung des Ventilgliedes (20) drehverstellbar ist, und wobei das Ventilglied (20) aus einer zum Kanalabschnitt (12) quer gerichteten kreisförmigen Klappe (21) gebildet ist, die in ihrer Schließstellung mit Randbereichen (22) dieser an axialen Anschlagflächen (23, 24) beiderseits der Achse (41) im Gehäuse (11) anliegt,
**dadurch gekennzeichnet,**
**dass** die Stellwelle (40) mit dem Endabschnitt ihrer im Drehantrieb (31) enthaltenen Antriebswelle (32) im Drehantrieb (31) mittels eines Radiallagers (48) und eines Axiallagers (49) gelagert ist.

2. Ventil nach Anspruch 1,
**dadurch gekennzeichnet,**
**dass** die Stellwelle (40) im Gehäuse (11) in nur einem Radiallager (46; 65), vorzugsweise in Form eines Gleitlagers, gelagert ist, das im Gehäuse (11), längs der Achse (41) betrachtet, auf einer Seite der Klappe (21) und in Abstand von dieser angeordnet ist.

3. Ventil nach Anspruch 1 oder 2,
**dadurch gekennzeichnet,**
**dass** die Antriebswelle (32) ein mit dieser fest verbundenes Sensorelement (38), insbesondere einen Sensormagneten, als Teil einer berührungslosen Drehstellungssensoreinrichtung zur direkten Sensierung der jeweiligen Stellung der Klappe (21) aufweist.

4. Ventil nach einem der Ansprüche 1 bis 3,
**dadurch gekennzeichnet,**
**dass** die Klappe (21) eine diametral verlaufende Bohrung (27) enthält, in der ein zugeordneter Endbereich der Stellwelle (40) aufgenommen ist und die als Sacklochbohrung oder als diametral durchgehende, beidendig offene Bohrung ausgebildet ist, und vorzugsweise, dass die Klappe (21) mittels eines oder mehreren Befestigungsmitteln (28), insbesondere Schrauben, an der Stellwelle (40) befestigt ist, die quer zur Achse (41) gerichtet sind und quer verlaufende Bohrungen (44 bzw. 29) in der Stellwelle (40) und in der Klappe (21) durchsetzen.

5. Ventil nach einem der Ansprüche 1 bis 4,
**dadurch gekennzeichnet,**
**dass** die Stellwelle (40) das Gehäuse (11) nur in einem Gehäusebereich (45), der sich zwischen der Klappe (21) und dem Drehantrieb (31) befindet, durchsetzt und zusammen mit der Klappe (21) in den Kanalabschnitt (12) ragt, oder dass die Stellwelle (40) das Gehäuse (11) beidseitig der Klappe (21) durchsetzt und mit dem Wellenende (64), das auf der dem Drehantrieb (31) abgewandten Seite der Klappe (21) aus dieser herausragt, mittels des einen Radiallagers (65) im Gehäuse (11) gelagert ist, wobei vorzugsweise das eine Radiallager (46; 65) im Gehäuse (11) zum Kanalabschnitt (12) hin mittels eines Dichtungsringes (47; 66), vorzugsweise aus peroxidisch vernetztem Kunststoff, abgedichtet ist.

6. Ventil nach einem der Ansprüche 1 bis 5,
**dadurch gekennzeichnet,**
**dass** im Gehäuse (11) zwischen diesem und dem Drehantrieb (31) ein mit der Stellwelle (40) drehfest und axial gekuppelter Mitnehmer (52) und eine Fail-Safe-Feder (51), vorzugsweise eine zylindrische Schraubenfeder, angeordnet sind, die innerhalb des Mitnehmers (52) aufgenommen und zentriert ist und mit einem Federende (55) am Mitnehmer (52) fixiert ist, während ein anderes Federende (56) am Drehantriebsgehäuse (33) fixiert ist.

7. Ventil nach Anspruch 6,
**dadurch gekennzeichnet,**
**dass** an der Stellwelle (40) ein Rastglied (53), z. B. ein Stift, befestigt ist, das in eine axiale Rastöffnung (59, 60), z. B. einen Schlitz, des Mitnehmers (52) formschlüssig zur Drehmitnahme des Mitnehmers (52) eingreift.

8. Ventil nach einem der Ansprüche 6 oder 7,
**dadurch gekennzeichnet,**
**dass** der Mitnehmer (52) mittels einer Klipsverbindung axial mit der Stellwelle (40) gekuppelt ist und dass die Klipsverbindung mit dem Rastglied (53) zusammenwirkende, z. B. in Bezug auf die Rastöffnung (59, 60) radial beabstandete, Rastelemente (62, 63), z. B. Rastnasen aufweist, mit denen das Rastglied (53) unter zumindest axialer Verrastung beim Zusammenbau verrastet.

9. Ventil nach einem der Ansprüche 6 bis 8,
**dadurch gekennzeichnet,**
**dass** die Fail-Safe-Feder (51) in Bezug auf das Drehantriebsgehäuse (33) mittels eines etwa zylindrischen Führungsteiles (57) dieses zentriert ist, der von der Feder (51) übergriffen ist.

10. Ventil nach einem der Ansprüche 1 bis 9,
**dadurch gekennzeichnet,**
**dass** das Gehäuse (11) einen Befestigungsflansch (17) und das Drehantriebsgehäuse (33) Befestigungsteile, z. B. Befestigungslaschen (34), aufweisen und mittels dieser und mittels diese durchgreifender Befestigungsmittel (19) miteinander verbunden sind.

11. Ventil nach Anspruch 10,
**dadurch gekennzeichnet,**
**dass** der Befestigungsflansch (17) des Gehäuses (11) eine in Bezug auf die Stellwelle (40) koaxiale Vertiefung (54) enthält, in der der Mitnehmer (52) und die Fail-Safe-Feder (51) aufgenommen sind.

12. Ventil nach einem der Ansprüche 1 bis 11,
**dadurch gekennzeichnet,**
**dass** die Klappe (21) am Außenrand eine umlaufende Lippe (25), z. B. mit geringerer Querschnittsdicke, aufweist, mit der die Klappe (21) in ihrer Schließstellung an den gehäuseseitigen axialen Anschlagflächen (23, 24) dichtend axial anliegt.

13. Ventil nach einem der Ansprüche 1 bis 12,
**dadurch gekennzeichnet,**
**dass** die gehäuseseitigen axialen Anschlagflächen (23, 24) innerhalb einer in Bezug auf eine Diagonale des Kanalabschnitts (12) unter einem spitzen Winkel schräg verlaufenden Ebene enthalten sind.

14. Ventil nach einem der Ansprüche 1 bis 13,
**dadurch gekennzeichnet,**
**dass** der Kanalabschnitt (12) eine mit dem Gehäuse(11) fest verbundene Rohrauskleidung (68), z. B. aus Edelstahl, als Korrosionsschutz aufweist, die die axialen Anschlagflächen (23, 24) aufweist.

15. Ventil nach einem der Ansprüche 1 bis 14,
**dadurch gekennzeichnet,**
**dass** das Gehäuse (11) aus einem Druckgussteil, insbesondere Aluminiumdruckgussteil, gebildet ist, und vorzugsweise, dass die Klappe (21) aus einem Feingussteil, insbesondere aus Edelstahl, gebildet ist.

## Claims

1. Valve, particularly low pressure valve, for controlling exhaust gas recirculation in an internal combustion engine, particularly in a motor vehicle, having a housing (11), which comprises a channel section (12) for exhaust gas guidance, having a valve element (20), which is arranged in the housing and configured to control the exhaust gas passage in the channel section (12), and having an actuating drive (30), which is mounted on the housing (11) and configured for adjusting the valve element (20),
wherein the actuating drive (30) is formed of an electromagnetic rotary actuator (31) and a drive shaft (32) thereof, wherein the drive shaft (32) is routed in an extended manner out of the rotary actuator housing (33) and is formed as actuating shaft (40) extending continuously to the housing (11), protruding into the housing (11) transversely to a flow direction, engaging in the housing (11) at the valve element (20) in a non-rotatable manner and being rotationally adjustable about its axis (41) in order to actuate the valve element (20), and wherein the valve element (20) is formed of a circular flap, which is directed transversely to the channel section (12) and, in the closed position thereof, bears via edge regions (22) against axial stop surfaces (23, 24) on both sides of the axis (41) in the housing (11),
**characterized in that**
the actuating shaft (40), via an end section of the drive shaft (32) in the rotary actuator (31), is supported by a radial bearing (48) and an axial bearing (49).

2. Valve according to claim 1, **characterized in that** the actuating shaft (40) is supported in the housing (11) in only one radial bearing (46; 65), preferably in form of a slide bearing, which is disposed in the housing (11), as viewed along the axis (41), on one side of the flap (21) and at a distance therefrom.

3. Valve according to claim 1 or 2, **characterized in that** the drive shaft (32) comprises a sensor element (38), particularly a sensor magnet, fixedly connected thereto, as part of a contactless rotary position sensor device for direct sensing the position of the flap (21).

4. Valve according to one of the claims 1 to 3, **characterized in that** the flap (21) comprises a diametrically extending bore (27), in which an assigned end region of the actuating shaft (40) is accommodated and which is designed as blind bore hole or as diametrically continuous bore being open at both ends, and preferably **in that** the flap (21) is fastened via one or more fastening means (28) at the actuating shaft (40), which fastening means (28), particularly screws, are directed transversely to the axis (41) and extend through transversely extending bores (44 or 29) in the actuating shaft (40) and in the flap (21).

5. Valve according to one of the claims 1 to 4, **characterized in that** the actuating shaft (40) extends through the housing (11) only in a housing region (45) located between the flap (21) and the rotary actuator (31) and extends together with the flap (21) into the channel section (12), or **in that** the actuating shaft (40) extends through the housing (11) on both sides of the flap (21) and is supported by way of a radial bearing (65) in the housing (11) via a shaft end (64), which extends out of the flap (21) on the side thereof facing away from the rotary actuator (31), wherein preferably the one radial bearing (46; 65) is sealed in the housing towards the channel section (12) by way of a sealing ring (47; 66), preferably made of a peroxide-cured plastic.

6. Valve according to one of the claims 1 to 5, **characterized in that** a driving element (52) being non-rotatably and axially coupled to the actuating shaft (40) and a fail-safe-spring (51), preferably a cylindrical coil spring, are arranged in the housing (11) between same and the rotary actuator (31), wherein the fail-safe-spring is accommodated and centered within the driving element (52) and fixed via a spring end (55) at the driving element (52) while another spring end (56) is fixed at the rotary actuator housing (33).

7. Valve according to claim 6, **characterized in that** a lock-in element (53), for example a pin, is fastened at the actuating shaft (40) and engages in an axial lock-in opening (59, 60), for example a slot, of the driving element (52) in a form-fit manner in order to rotationally drive the driving element (52).

8. Valve according to one of the claims 6 or 7, **characterized in that** the driving element (52) is axially coupled to the actuating shaft (40) by way of a clip connection and **in that** the clip connection comprises lock-in elements (62, 63), for example locking lugs, which interact with the lock-in element (53), which, for example, have a radial distance in relation to the lock-in opening (59, 60) and with which the lock-in element (53) axially locks during assembly.

9. Valve according to one of the claims 6 to 8, **characterized in that** the fail-safe-spring (51) is centered with respect to the rotary actuator housing (33) via a substantially cylindrical guide part (57) thereof, which is overlapped by the spring (51).

10. Valve according to one of the claims 1 to 9, **characterized in that** the housing (11) comprises a fastening flange (17) and the rotary actuator housing (33) comprises fastening parts, for example fastening tabs (34), and the housing (11) and the rotary actuator housing (33) are connected to one another by way of those parts and by way of fastening means (19) extending through those parts.

11. Valve according to claim 10, **characterized in that** the fastening flange (17) of the housing (11) contains a recess (54), which is coaxial with respect to the actuating shaft (40) and in which the driving element (52) and the fail-safe-spring (51) are accommodated.

12. Valve according to one of the claims 1 to 11, **characterized in that** the flap (21) comprises a circumferential lip (25), for example having a smaller cross-sectional thickness, on an outer edge, by way of which the flap (21) axially bears in the closed position thereof against housing-side axial stop surfaces (23, 24) in a sealing manner.

13. Valve according to one of the claims 1 to 12, **characterized in that** the housing-side axial stop surfaces (23, 24) are contained within a plane, that extends obliquely at an acute angle with respect to a diagonal of the channel section (12).

14. Valve according to one of the claims 1 to 13, **characterized in that** the valve section (12) comprises a tube lining (68), for example made of stainless steel, that is fixedly connected to the housing (11) as corrosion protection and which comprises the axial stop surfaces (23, 24).

15. Valve according to one of the claims 1 to 14, **characterized in that** the housing (11) is formed as a diecast part, particularly an aluminum diecast part, and preferably **in that** the flap (21) is formed as a precision-cast part, particularly made of stainless steel.

## Revendications

1. Soupape, notamment soupape basse pression, destinée à la commande d'un recyclage de gaz d'échappement dans un moteur à combustion interne, notamment dans un véhicule, avec un boîtier (11) qui contient un segment de canalisation (12) pour l'échappement des gaz, avec un élément de soupape (20) qui est disposé dans le boîtier (11) et est conçu pour la commande du passage des gaz d'échappement dans le segment de canalisation (12), et avec un entraînement de réglage (30) qui est rapporté sur le boîtier (11) et est conçu pour le réglage de l'élément de soupape (20),
où l'entraînement de réglage (30) est formé par un entraînement rotatif (31) électromagnétique avec un arbre d'entraînement (32) de ce dernier, où l'arbre d'entraînement (32) est mené prolongé hors du boîtier d'entraînement rotatif (33) et est conçu sous la forme d'un arbre de réglage (40) traversant jusqu'au boitier (11), qui pénètre à l'intérieur du boitier (11) transversalement par rapport à la direction de l'écoulement, s'accroche à l'intérieur d'une manière non-rotative sur l'élément de soupape (20) et est réglable en rotation autour de son axe (41) pour l'actionnement de l'élément de soupape (20), et où l'élément de soupape (20) est formé d'un clapet (21) de forme circulaire, qui est orienté transversalement par rapport au segment de canalisation (12) et est plaqué dans sa position de fermeture avec des régions de bordure (22) de celui-ci au niveau de surfaces d'appui (23, 24) axiales des deux côtés de l'axe (41) dans le boîtier (11),
**caractérisée en ce**
**que** l'arbre de réglage (40) est logé avec la partie d'extrémité de son arbre d'entraînement (32) contenu dans l'entraînement rotatif (31) au moyen d'un palier radial (48) et d'un palier axial (49).

2. Soupape selon la revendication 1,
**caractérisée en ce**
**que** l'arbre de réglage (40) est logé dans le boîtier (11) dans uniquement un palier radial (46 ; 65), de préférence sous la forme d'un palier de glissement, qui est disposé dans le boîtier (11), vu le long de l'axe (41), sur un côté du clapet (21) et espacé par rapport à celui-ci.

3. Soupape selon la revendication 1 ou 2,
**caractérisée en ce**
**que** l'arbre d'entraînement (32) présente un élément capteur (38) relié solidement à celui-ci, notamment un aimant de capteur, en tant que composant d'un agencement de capteurs de position de rotation sans contact pour la détection directe de la position en cours du clapet (21).

4. Soupape selon l'une des revendications 1 à 3,
**caractérisée en ce**
**que** le clapet (21) contient un alésage (27) s'étendant diamétralement, dans lequel est reçue une région d'extrémité de l'arbre de réglage (40) associée, et qui est conçu sous la forme d'un alésage borgne ou sous la forme d'un alésage traversant diamétralement, ouvert des deux côtés, et de préférence, que le clapet (21) est fixé à l'arbre de réglage (40) au moyen d'un ou de plusieurs moyens de fixation (28), notamment des vis, qui sont orientés transversalement par rapport à l'axe (41) et traversent des alésages s'étendant transversalement (44, respectivement 29) dans l'arbre de réglage (40) et dans le clapet (21).

5. Soupape selon l'une des revendications 1 à 4,
**caractérisée en ce**
**que** l'arbre de réglage (40) traverse le boîtier (11) uniquement dans une région de boîtier (45) qui se situe entre le clapet (21) et l'entraînement rotatif (31), et pénètre conjointement avec le clapet (21) dans le segment de canalisation (12), ou que l'arbre de réglage (40) traverse le boîtier (11) des deux côtés du clapet (21) et est logé avec l'extrémité d'arbre (64) qui émerge du clapet (21) sur le côté de celui-ci opposé à l'entraînement rotatif (31), au moyen de l'un des paliers radiaux (65) dans le boîtier (11), où, de préférence, le palier radial (46 ; 65) en question est rendu étanche dans le boîtier (11) vis-à-vis du segment de canalisation (12) au moyen d'une bague d'étanchéité (47 ; 66) constituée de préférence en matière plastique réticulée par un peroxyde.

6. Soupape selon l'une des revendications 1 à 5,
**caractérisée en ce**
**que**, dans le boîtier (11), entre celui-ci et l'entraînement rotatif (31), une pièce d'entraînement (52) couplée d'une manière non-rotative et axialement avec l'arbre de réglage (40) et un ressort de sécurité (51), de préférence, un ressort hélicoïdal cylindrique, sont disposés, où le ressort est logé et centré à l'intérieur de la pièce d'entraînement (52) et est fixé sur la pièce d'entraînement (52) avec une extrémité de ressort (55), tandis qu'une autre extrémité de ressort (56) est fixée au boîtier d'entraînement rotatif (33).

7. Soupape selon la revendication 6,
**caractérisée en ce**
**qu'**au niveau d'un élément de butée (53), par exemple, une tige, est fixé à l'arbre de réglage (40) et se met en prise par complémentarité des formes dans un orifice de butée (59, 60) axial, par exemple, une fente, de la pièce d'entraînement (52), pour l'entraînement en rotation de la pièce d'entraînement (52).

8. Soupape selon l'une des revendications 6 ou 7,
**caractérisée en ce**
**que** la pièce d'entraînement (52) est couplée axialement avec l'arbre de réglage (40) au moyen d'une liaison par clips et que la liaison par clips présente des éléments de butée (62, 63), par exemple, des saillies de butée, qui agissent conjointement avec l'élément de butée (53), qui sont, par exemple, espacés radialement, par rapport à l'orifice de butée (59, 60), et avec lesquels l'élément de butée (53) se verrouille lors de l'assemblage moyennant au moins un verrouillage axial.

9. Soupape selon l'une des revendications 6 à 8,
**caractérisée en ce**
**que** le ressort de sécurité (51) est centré par rapport au boîtier d'entraînement rotatif (33) au moyen d'une pièce de guidage (57) à peu près cylindrique de celui-ci qui est coiffée par le ressort (51).

10. Soupape selon l'une des revendications 1 à 9,
**caractérisée en ce**
**que** le boîtier (11) présente une bride de fixation (17) et le boîtier d'entraînement rotatif (33) présente des pièces de fixation, par exemple, des pattes de fixation (34), et le boîtier (11) et le boîtier d'entraînement rotatif (33) sont reliés ensemble au moyen de lesquelles et au moyen des éléments de fixation (19) traversants desquelles.

11. Soupape selon la revendication 10,
**caractérisée en ce**
**que** la bride de fixation (17) du boîtier (11) contient une cavité (54) coaxiale par rapport à l'arbre de réglage (40), dans laquelle la pièce d'entrainement (52) et le ressort de sécurité (51) sont logés.

12. Soupape selon l'une des revendications 1 à 11,
**caractérisée en ce**
**que** le clapet (21) présente une lèvre (25) circonférentielle sur le bord extérieur, par exemple, avec une épaisseur de section transversale plus faible, avec laquelle la clapet (21) se plaque axialement de manière étanche au niveau des surfaces d'appui (23, 24) axiales du côté du boîtier dans sa position de fermeture.

13. Soupape selon l'une des revendications 1 à 12,
**caractérisée en ce**
**que** les surfaces d'appui (23, 24) axiales du côté du boîtier sont contenues à l'intérieur d'un plan s'étendant de manière inclinée par rapport à une diagonale du segment de canalisation (12) en faisant un angle aigu.

14. Soupape selon l'une des revendications 1 à 13,
**caractérisée en ce**
**que** le segment de canalisation (12) présente un revêtement de tube (68), par exemple, en acier inoxydable, en tant que protection contre la corrosion, qui est solidement relié avec le boîtier (11) et qui présente les surfaces d'appui (23, 24) axiales.

15. Soupape selon l'une des revendications 1 à 14,
**caractérisée en ce**
**que** le boîtier (11) est formé d'une pièce de moulage sous pression, notamment une pièce en moulage d'aluminium sous pression, et de préférence, que le clapet (21) est formé à base d'une pièce en coulée de précision, notamment à base d'acier inoxydable.
